# EUROPÄISCHE PATENTSCHRIFT

(11) **EP 2 725 398 B1**
(45) Veröffentlichungstag und Bekanntmachung des Hinweises auf die Patenterteilung: **20.03.2019**
(21) Anmeldenummer: 12306308.3
(22) Anmeldetag: 23.10.2012
(51) Int. Cl.: G02B 6/44, B60L 3/00, B60L 3/04, B60L 11/00, B60L 11/18, G01M 5/00, G01M 11/08, H01B 7/32

(54) **Elektrische Leitung für ein Kraftfahrzeug**
Electric cable for a motor vehicle
Câble électrique pour véhicule automobile

(43) Veröffentlichungstag der Anmeldung: 30.04.2014
(73) Patentinhaber: Nexans, 92400 Courbevoie (FR)
(72) Erfinder: Steinberg, Dr. Helmut, 92721 Störnstein (DE)
(74) Vertreter: Lenne, Laurence

(56) Entgegenhaltungen:
- EP-A1- 1 921 635
- WO-A1-2010/136062
- US-A1- 2005 244 116
- US-B1- 6 559 437
- US-B1- 7 154 081

## Beschreibung

Die Erfindung bezieht sich auf eine elektrische Leitung gemäß dem Oberbegriff des einzigen Patentanspruchs.

Eine derartige Leitung geht aus der EP 1 921 635 B1 hervor.

Eine solche Leitung kann bei einem durch einen Elektromotor angetriebenen Kraftfahrzeug - im folgenden kurz "Fahrzeug" genannt - und auch bei einem Fahrzeug eingesetzt werden, das in Hybridtechnik einen Verbrennungsmotor und einen Elektromotor als Antriebe aufweist. Der Elektromotor wird bei beiden Ausführungsarten des Antriebs aus einer entsprechend dimensionierten Energiequelle gespeist. Er ist in bekannter Technik ein Drehstrommotor, für dessen Betrieb durch einen ebenfalls im Fahrzeug untergebrachten, mit einer Energiequelle verbundenen Wechselrichter ein Wechselstrom erzeugt wird. Die Energiequelle ist beispielsweise ein aus einer Vielzahl von Kondensatoren (Ultracaps) bestehender Energiespeicher, der beispielsweise im Kofferraum eines Fahrzeugs untergebracht sein kann. Die Kapazität der Kondensatoren reicht für einen kurzzeitigen Betrieb des Elektromotors aus. Sie werden beispielsweise während des Bremsbetriebs des Fahrzeugs durch den dann als Generator wirkenden Elektromotor wieder aufgeladen. Zum Betrieb des Elektromotors ist derselbe mittels einer elektrischen Leitung mit dem Wechselrichter verbunden, der seinerseits über eine elektrische Leitung mit dem Energiespeicher verbunden ist. "Aggregate" sind dementsprechend insbesondere der Elektromotor, der Wechselrichter und der Energiespeicher.

Die EP 1 921 635 B1 beschreibt eine Kühlvorrichtung für ein Fahrzeug, das einen aus zwei Motoren bestehenden Antrieb aufweist, von denen einer ein Verbrennungsmotor und der andere ein über eine elektrische Leitung mit einem an eine elektrische Energiequelle angeschlossenen Wechselrichter verbundener Elektromotor ist. Die Leitung besteht aus drei elektrischen Leitern, die zusammen mit mindestens zwei Rohren in Form einer Flachleitung, jeweils mit Abstand zueinander, in einen gemeinsamen Träger aus Isoliermaterial eingebettet sind. Die Rohre sind einerseits mit Kühlelementen der Energiequelle und des Wechselrichters verbunden und andererseits zur Bildung eines Kühlmittelkreislaufs an einen Wärmetauscher angeschlossen. Auf einer Seite des Trägers ist in demselben mit Abstand zu einem der Rohre ein an eine Meß- und Auswerteeinheit anschließbarer Lichtwellenleiter angeordnet, der zur Überwachung der Leitung auf deren Unversehrtheit dienen kann.

Das Kabel nach der US 2005/0244116 A1 hat Übertragungselemente, bei denen es sich auch um elektrische Leiter handeln kann, die in einer Kabelseele um einen zugfesten Kern herum angeordnet sind. Die Kabelseele ist von mehreren, mechanisch stabilen Schichten umgeben, zu denen zwei Stahlarmierungen gehören. Über der äußeren Stahlarmierung ist ein Kunststoffmantel angebracht, in dem in Umfangsrichtung mit Abstand zueinander verteilt optische Fasern eingebettet sind. Diese Fasern sind an eine Überwachungseinrichtung angeschlossen. Mittels der Fasern soll eine Beschädigung des Kabels angezeigt werden, die beispielsweise durch Hitze, Lösungsmittel oder andere chemische Substanzen erzeugt wird. Es soll dadurch sichergestellt werden, daß die Übertragung von sensiblen Daten über das Kabel nicht beeinträchtigt wird.

Aus der eingangs erwähnten EP 1 921 635 B1 geht eine elektrische Leitung hervor, welche der elektrischen Verbindung eines in einem Fahrzeug angebrachten Aggregats mit einer ebenfalls im Fahrzeug befindlichen elektrischen Energiequelle und/oder mit einem anderen elektrischen Aggregat dient. Die Leitung ist als dreiphasige Leitung mit drei isolierten elektrischen Leitern ausgeführt, von denen jeder einen an seiner Isolierung anliegenden, rundum geschlossenen elektrischen Einzelschirm aufweist. Es ist außerdem ein die drei geschirmten Leiter unter Zwischenschaltung von Isoliermaterial gemeinsam umgebender, rundum geschlossener elektrischer Außenschirm vorhanden. Zumindest an einem Ende der Leitung ist ein mit gegeneinander isolierten, elektrischen Kontakten ausgerüstetes Kupplungselement feuchtigkeitsdicht angebracht, an dessen Kontakte die elektrischen Leiter, deren Einzelschirme und der Außenschirm getrennt voneinander elektrisch leitend angeschlossen sind. Eine solche Leitung ist gegenüber elektromagnetischer Strahlung geschützt und sie kann keine Störstrahlung erzeugen, solange die Schirme wirksam sind.

Der Erfindung liegt die Aufgabe zugrunde, die eingangs geschilderte Leitung so zu gestalten, daß ihre Funktionssicherheit auf einfache Art und Weise kontrolliert werden kann.

Diese Aufgabe wird entsprechend dem kennzeichnenden Merkmal des Patentanspruchs gelöst.

Diese Leitung hat mit dem mindestens einen, im Schirm integrierten bzw. innen an demselben anliegenden Lichtleiter in ihrem Aufbau ein Bauteil, mit dem ihre Funktionssicherheit bzw. Unversehrtheit ständig mit großer Sicherheit überwacht wird. Das ist besonders dann wichtig, wenn die Leitung als Hochstromleitung eingesetzt und an eine elektrische Spannungsquelle mit bis zu 600 V angeschlossen ist. Eine Beschädigung der Leitung kann daher zur Gefährdung von im Fahrzeug befindlichen Personen führen. Durch den im Aufbau der Leitung weit außen angeordneten Lichtleiter wird eine Verformung bzw. Beschädigung desselben, die bei einer Beschädigung der Leitung eintritt, insbesondere des Schirms derselben, durch die Auswerteeinheit sofort registriert, durch welche ständig Licht bzw. Lichtimpulse in den Lichtleiter eingekoppelt wird bzw. werden. Durch ein entsprechendes Signal der Auswerteeinheit wird das mit derselben gekoppelte Schaltelement aktiviert, durch welches die Leitung unmittelbar nach ihrer Beschädigung von der Spannungsquelle getrennt wird. Die Auswerteeinheit kann beispielsweise mit einem Reflektometer ausgerüstet sein, welches ein an einer Verformungsstelle bzw. an einer Unterbrechung des Lichtleiters reflektiertes Signal erkennt.

Ausführungsbeispiele des Erfindungsgegenstandes sind in den Zeichnungen dargestellt.

Es zeigen:
Fig. 1 in schematischer Darstellung eine Stromversorgungseinheit für einen Elektromotor eines Fahrzeugs.
Fig. 2 einen Querschnitt durch die Leitung nach der Erfindung.
Fig. 3 eine gegenüber Fig. 2 andere Ausführungsform der Leitung ebenfalls im Schnitt.

In den Zeichnungen sind nur die für das Verständnis der Erfindung erforderlichen Einzelheiten dargestellt. Kupplungselemente, die im Einsatzfall an die Leitung angeschlossen sein können, sind der Einfachheit halber nicht mit dargestellt.

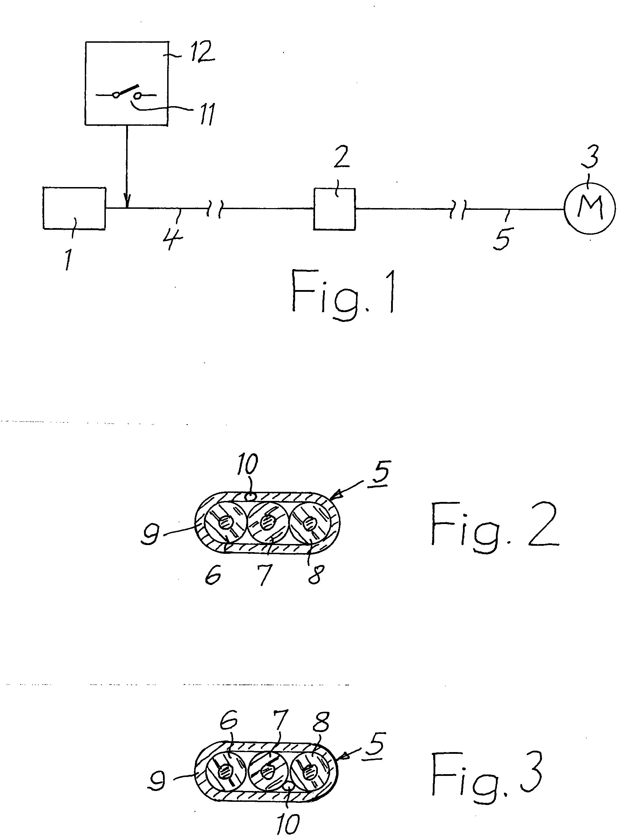

In Fig. 1 sind schematisch eine Energiequelle 1, die ein aus einer Vielzahl von Kondensatoren bestehender Energiespeicher oder eine anders aufgebaute Batterie sein kann, ein Wechselrichter 2 und ein als Drehstrommotor ausgeführter Elektromotor 3 dargestellt. Energiequelle 1 und Wechselrichter 2 sind beispielsweise durch eine zweiadrige Leitung 4 miteinander verbunden, die zum Schutz gegen elektromagnetische Strahlung (EMV) von einer Anschirmung umgeben sein kann. Zwischen Wechselrichter 2 und Elektromotor 3 ist beispielsweise eine dreiadrige elektrische Leitung 5 angeschlossen.

Die Leitung 5 weist in der Ausführungsform nach Fig. 2 als Drehstromleitung drei isolierte elektrische Leiter 6, 7 und 8 auf, die in bevorzugter Ausführungsform in einer Ebene nebeneinander liegen. Die drei Leiter 6, 7 und 8 könnten auch miteinander verseilt sein. Es kann auch mindestens ein weiterer, anderen Zwecken dienender Leiter mit den drei Leitern kombiniert sein. Die Leiter 6, 7 und 8 bestehen aus einem elektrisch gut leitenden Kern, der von einer Isolierung umgeben ist. Für den Kern wird vorzugsweise Kupfer eingesetzt. Die Isolierung kann beispielsweise aus Polyethylen bestehen.

Die Leiter 6, 7 und 8 sind von einem gemeinsamen, elektrisch wirksamen Schirm 8 umgeben, der in bevorzugter Ausführungsform als Geflecht aus Kupferdrähten ausgeführt ist. Im Leitungsaufbau ist außerdem auf der ganzen Länge der Leitung 5 ein Lichtleiter 9 vorhanden, der gemäß Fig. 2 im Schirm 8 integriert ist. Der Lichtleiter 9 wird bei der Fertigung des Schirms 8 zweckmäßig als "Draht" in denselben eingearbeitet. Er besteht mit Vorteil aus einem polymeren Material. Der Lichtleiter 9 ist bei fertig montierter Leitung 5 an eine mit einem Schaltelement 10 ausgerüstete Auswerteeinheit 11 angeschlossen, die in Fig. 1 schematisch eingezeichnet sind. Im Aufbau der Leitung 5 soll mindestens ein Lichtleiter 9 vorhanden sein.

Die Auswerteeinheit 11 kann beispielsweise im Wechselrichter 2 angeordnet sein. Sie schaltet über das Schaltelement 10 direkt, beispielsweise durch ein Schütz oder ein Relais, den über die Leitung 5 fließenden Strom ab. Als Schaltelement 10 kann auch eine Sprengladung eingesetzt werden, durch welche im Falle einer festgestellten Beschädigung der Leitung 5 die Anschlußklemmen der Leitung 5 an der Energiequelle 1 weggesprengt werden, so dass die Anordnung schlagartig stromlos wird.

Gemäß Fig. 3 kann der Lichtleiter 9 auch unterhalb des Schirms 8 der Leitung 5 unter Anlage an demselben angeordnet sein.

## Patentansprüche

1. Elektrische Leitung zum elektrisch leitenden Verbinden von zwei in einem Kraftfahrzeug angeordneten Aggregaten, welche isolierte elektrische Leiter aufweist, die von einem gemeinsamen, elektrisch wirksamen Schirm umgeben sind, **dadurch gekennzeichnet, daß** auf der ganzen Länge der Leitung (5) im Aufbau derselben mindestens ein Lichtleiter (10) vorhanden ist, der in Arbeitsposition an eine mit einem Schaltelement (11) gekoppelte Auswerteeinheit (12) angeschlossen ist und der im Schirm (9) der Leitung (5) integriert oder unmittelbar unterhalb des Schirms (9) der Leitung (5) unter Anlage an demselben angeordnet ist, so daß eine Beschädigung der Leitung (5) mit Sicherheit zumindest eine Verformung des Lichtleiters (10) erzeugt, die zu einem durch die Auswerteeinheit (12) erkennbaren Signal führt.

## Claims

1. An electrical line for electrically conductively connecting two units arranged in a motor vehicle, which has insulated electrical conductors, which are surrounded by a common, electrically effective screen, **characterized in that** on the entire length of the line (5) in the structure of the same at least one light guide (10) is present, which is connected in the working position to an evaluation unit (12) coupled with a switching element (11) and which is integrated in the screen (9) of the line (5) or is arranged directly below the screen (9) of the line (5) in contact with the same, so that a damage of the line (5) with certainty generates at least one deformation of the light guide (10), which leads to a signal recognizable by the evaluation unit (12).

## Revendications

1. Ligne électrique pour la liaison électro-conductrice de deux agrégats disposés dans un véhicule à moteur, qui comprend des conducteurs électriques isolés, qui sont entourés d'un blindage électrique commun, **caractérisée en ce que**, sur toute la longueur de la ligne (5), dans la structure de celle-ci, se trouve au moins une fibre optique (10) qui est raccordée, en position de travail, à une unité d'analyse (12) couplée à un élément de commutation (11) et qui est intégrée dans le blindage (9) de la ligne (5) ou qui est disposée immédiatement en dessous du blindage (9) de la ligne (5) en appui contre celle-ci, de façon à ce qu'un endommagement de la ligne (5) produise, avec sécurité, au moins une déformation de la fibre optique (10), qui provoque la génération d'un signal reconnaissable par l'unité d'analyse (12).
